# DEMANDE DE BREVET EUROPEEN

(11) **EP 0 593 350 A1**
(43) Date de publication de la demande: **20.04.1994**
(21) Numéro de dépôt: 93402501.6
(22) Date de dépôt: 11.10.1993
(51) Int. Cl.: B60M 1/28, H02G 1/00

(54) **Dispositif pour revêtir de graisse les rainures d'un fil de contact avant sa mise en place dans un profilé de ligne d'alimentation électrique**

(30) Priorité: 12.10.1992 FR 9212138
(71) Demandeur: DELACHAUX S.A., F-92230 Gennevilliers (FR)
(72) Inventeur: Josselin, Bernard, F-92500 Rueil Malmaison (FR)
(74) Mandataire: Martin, Jean-Jacques

(57) **Abrégé**

L'invention concerne un dispositif pour revêtir de graisse les rainures d'un fil de contact de ligne d'alimentation électrique, avant le montage de ce fil dans des profilés support, caractérisé en ce qu'il comprend
. une chambre de graissage (220) adaptée à remplir de graisse lesdites rainures, ouverte à deux extrémités opposées dont une ouverture amont (221) et une ouverture aval (222), entre lesquelles le fil de contact est apte à défiler,
. une alimentation en graisse débouchant à l'intérieur de ladite chambre (220).

## Description

La présente invention concerne un dispositif pour revêtir de graisse les rainures des fils de contact utilisés sur des lignes d'alimentation électrique, notamment pour l'alimentation en courant de véhicules électriques ferroviaires.

Les lignes d'alimentation électrique dont il s'agit, parfois appelées "troisième rail", comprennent un fil de contact présentant deux rainures longitudinales qui constitue une ligne de contact pour un organe de captation de courant (pantographe ou frotteur) porté par le véhicule ferroviaire. Ce fil est maintenu par des profilés support disposés bout à bout, comportant chacun une embase de laquelle partent deux branches latérales dont les extrémités libres forment une pince élastique adaptée à venir en prise avec les deux rainures longitudinales précitées.

La pose ou le remplacement du fil de contact s'effectue en écartant de façon continue les branches latérales. Ces opérations pourraient être effectuées plus rapidement et à moindre coût s'il n'était, jusqu'à maintenant, procédé manuellement au dépôt de graisse dans les rainures longitudinales du fil de contact, de façon à garantir tout phénomène de corrosion électrolytique entre le fil de contact et le profilé support dans la zone de pincement, ces derniers étant généralement réalisés dans des métaux différents.

Outre l'inconvénient de nécessiter des temps de main d'oeuvre importants, la graisse est souvent appliquée de façon grossière, et s'étend en dehors des rainures longitudinales du fil de contact sur la ligne de contact, ce qui provoque un charbonnement des contacts, donc une perte de puissance électrique et des phénomènes d'arcage qui détériorent l'organe de captation de courant et le fil de contact. Dans le cas de lignes d'alimentation électrique comprenant plusieurs fils de contact, le temps de main d'oeuvre requis pour le graissage est multiplié d'autant le nombre de fils et la pose ou le remplacement de ceux-ci devient alors très onéreux.

La présente invention a pour objet principal de proposer un dispositif remédiant aux inconvénients précités.

L'invention propose pour cela un dispositif pour revêtir de graisse les rainures d'un fil de contact de ligne d'alimentation électrique présentant au moins deux rainures longitudinales servant au montage du fil dans des profilés support, caractérisé en ce qu'il comprend :
. une chambre de graissage adaptée à remplir de graisse lesdites rainures longitudinales, ouverte à deux extrémités opposées dont une ouverture amont et une ouverture aval, entre lesquelles le fil de contact est apte à défiler, et
. une alimentation en graisse débouchant à l'intérieur de ladite chambre.

Selon une caractéristique avantageuse de l'invention, ce dispositif comporte de plus des moyens d'essuyage du fil de contact quittant la chambre de graissage, propres à essuyer la graisse déposée en excès sur le fil de contact et s'étendant hors des rainures longitudinales, ces moyens d'essuyage comprenant de préférence un système de joints d'étanchéité placés au niveau de l'ouverture aval et s'appliquant sur l'enveloppe de la section transversale du fil de contact. De préférence, les moyens d'essuyage comprennent de plus une raclette ayant la forme générale d'une coupelle, percée d'un orifice pour le passage du fil de contact, placée en aval de la chambre de graissage, la concavité de la coupelle étant orientée vers la chambre de graissage et le bord dudit orifice s'appliquant sur l'enveloppe de la section transversale dudit fil de contact.

En outre, pour garantir notamment une pression de graisse suffisante à l'intérieur de la chambre de graissage, il est prévu des moyens d'étanchéité placés au niveau de l'ouverture amont de la chambre de graissage qui, de préférence, comprennent un joint d'étanchéité amont.

Selon une autre caractéristique de l'invention, la chambre de graissage présente une section interne globalement décroissante dans le sens de défilement du fil de contact.

Dans un mode de réalisation préféré, la chambre de graissage est ménagée dans un corps de graisseur présentant depuis l'ouverture amont par laquelle le fil de contact est introduit jusqu'à l'ouverture aval par laquelle le fil de contact quitte la chambre de graissage, successivement :
. un alésage d'entrée de plus grand diamètre interne,
. une première paroi conique convergeante,
. un alésage central, de diamètre interne intermédiaire,
. une deuxième paroi conique convergeante,
. un alésage de sortie de plus petit diamètre interne.

Avantageusement, ledit joint d'étanchéité amont est un joint à lèvre logé dans l'alésage d'entrée.

De préférence, les moyens d'essuyage et d'étanchéité sont maintenus en place par l'intermédiaire de bagues d'entrée et de sortie, vissées à des extrémités opposées sur la surface externe du corps de graisseur, l'adaptation du dispositif à des tailles de fil de contact différentes se faisant en outre par simple changement des bagues et des moyens d'étanchéité et d'essuyage qu'elles maintiennent en place.

Avantageusement, une bague de centrage en élastomère est logée à l'intérieur de la bague d'entrée.

De préférence également, la pression de graisse à l'intérieur de la chambre de graissage est comprise entre 2 et 6 bars, et la vitesse de défilement du fil de contact dans la chambre de graissage est d'environ 2 km/h.

Le dispositif selon l'invention comprend également avantageusement un chariot pouvant se déplacer sur ladite ligne d'alimentation électrique, pour poser le fil de contact de façon continue.

L'invention a également pour objet une ligne d'alimentation électrique munie de deux fils de contact présentant chacun au moins deux rainures longitudinales susceptibles d'être revêtues de graisse par le dispositif précédemment défini, caractérisée en ce qu'elle comprend un profilé support comportant deux branches latérales et une branche centrale dont l'extrémité libre est en forme de fourche, de façon à former une pince élastique avec l'extrémité libre de chacune des branches latérales, propre à retenir par pincement chacun des deux fils de contact.

D'autres caractéristiques et avantages de l'invention apparaîtront à la lecture de la description détaillée qui va suivre, d'un exemple de réalisation non limitatif de l'invention, et à l'examen du dessin annexé sur lequel :
- la figure 1 représente en coupe transversale un profilé support de ligne d'alimentation électrique,
- la figure 2 est une coupe transversale à échelle agrandie d'un fil de contact,
- la figure 3 est une vue en coupe axiale d'un dispositif pour revêtir de graisse les rainures d'un fil de contact conforme à l'invention,
- la figure 3A est une coupe axiale montrant isolément le corps de graisseur,
- la figure 3B est une coupe axiale montrant isolément la bague d'entrée,
- la figure 3C est une coupe axiale montrant isolément la bague de sortie,
- la figure 3D est une coupe axiale montrant isolément la bague porte-joint,
- la figure 4 est une vue en coupe selon le trait de coupe IV-IV de la figure 3,
- la figure 5 est une vue de côté schématique montrant le dispositif conforme à l'invention en place sur un fil de contact,
- les figures 6A et 6B montrent respectivement en coupe transversale et en vue de côté une ligne d'alimentation électrique pour captation par pantographe,
- la figure 7 montre une variante de réalisation d'une ligne d'alimentation électrique du type troisième rail, avec, indiqué en traits mixtes, un chariot permettant la pose du fil de contact par écartement momentané des branches latérales du profilé support,
- la figure 8 montre en coupe transversale une ligne d'alimentation électrique dans laquelle le profilé support maintient deux fils de contact juxtaposés.

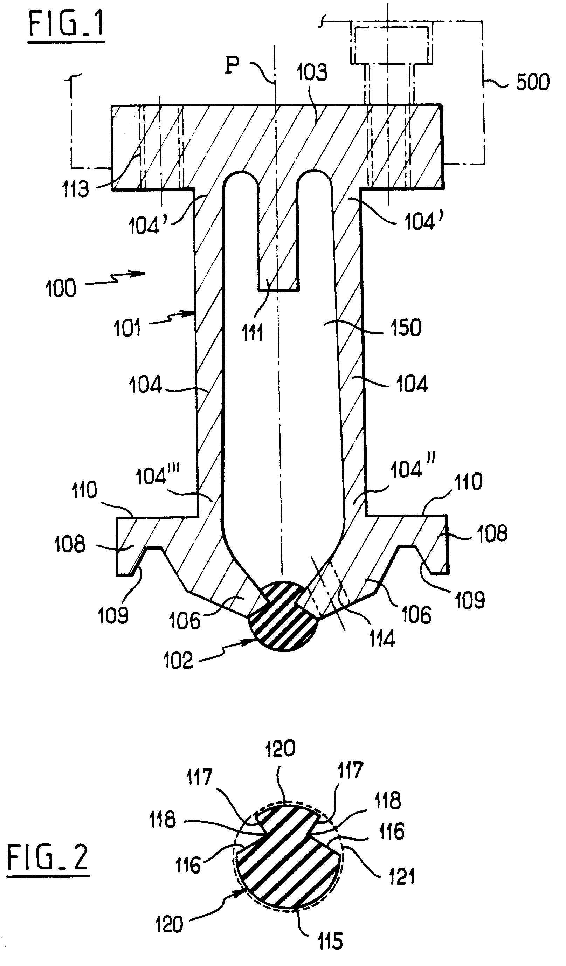

La figure 1 montre une ligne d'alimentation électrique 100 connue en elle-même. Celle-ci est essentiellement constituée par une pluralité de profilés support 101, généralement en aluminium, disposés bout à bout en série, chacun desdits profilés support 101 comportant une embase 103 de laquelle partent deux branches latérales 104 dont les extrémités libres 106 forment une pince élastique assurant le support d'un fil de contact continu 102, généralement en cuivre, commun à la pluralité des profilés support 101.

Les profilés support 101 sont liés entre eux par éclissage, avec des éclisses telles que l'éclisse 500 illustrée en traits mixtes sur la figure 1, ces éclisses assurant naturellement la continuité mécanique des profilés support, et aussi la continuité électrique de ces profilés, étant entendu que la continuité électrique du fil de contact 102 est quant à elle déjà assurée par le caractère continu dudit fil.

Les branches latérales 104 sont légèrement effilées en direction de leur extrémité libre 106 pour une meilleure élasticité propre: la base 104' de chaque branche latérale 104 est donc légèrement plus large que l'autre extrémité 104'', laquelle se prolonge par une extrémité libre 106 en biseau servant à assurer le pincement du fil de contact continu 102. On notera la présence, au voisinage de l'embase 103 du profilé support 101, et dans le plan de symétrie P dudit profilé, d'une nervure longitudinale supplémentaire 111, cette nervure permettant de faire varier la section du profilé pour une meilleure adaptation au problème particulier des chutes de tension.

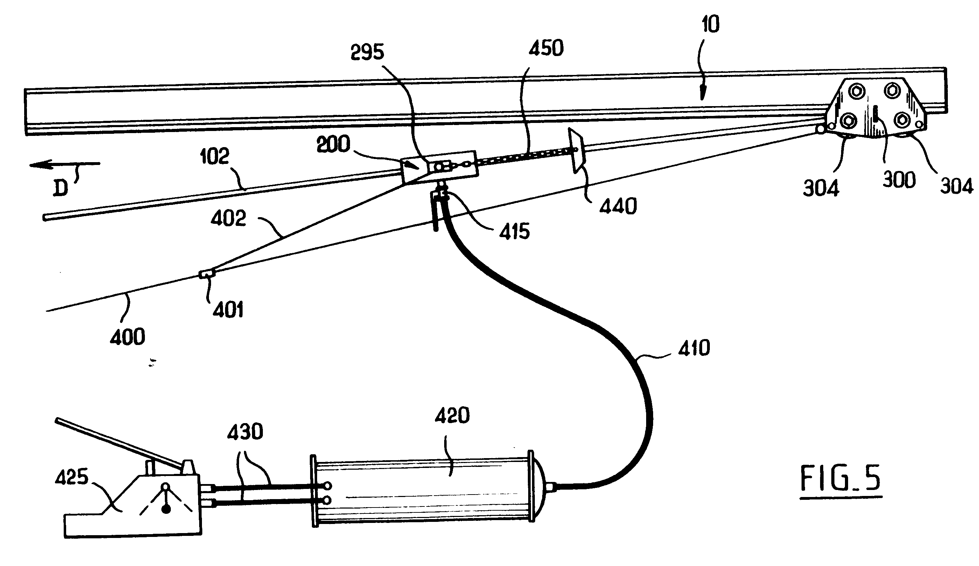

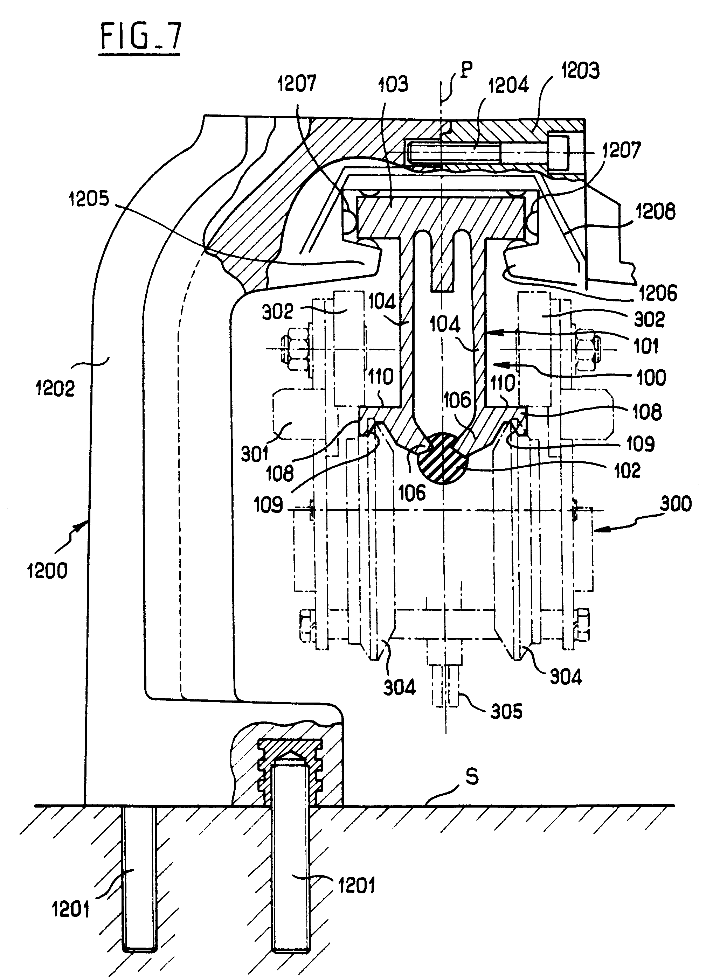

Chaque profilé support 101 comporte en outre, en partie inférieure de ses branches latérales 104, une nervure saillante 108 : chaque nervure 108 présente supérieurement une facette droite 110 servant de piste de roulement pour les galets d'un chariot de pose ou de remplacement du fil de contact 102, et inférieurement une rainure longitudinale 109 associée au passage des roues dudit chariot de pose pour réaliser un écartement momentané des branches latérales 104 du profilé support, ainsi que cela sera décrit plus loin en regard des figures 5 et 7. On notera en outre la présence, au voisinage de l'extrémité libre de l'une des branches latérales 104, d'un perçage 114 visant à faciliter l'évacuation de l'eau de condensation qui pourrait se former dans l'espace intérieur 150 du profilé support 101 : ces trous d'évacuation sont surtout intéressants dans le cas d'une captation de courant verticale par en dessous, et ils seront de préférence prévus sensiblement au milieu de la portée de fixation, afin de tenir compte de la flexion des profilés support.

On va maintenant décrire plus en détail la géométrie du fil de contact continu 102, donnée à titre d'exemple, dont la section transversale est mieux visible sur la figure 2.

Le fil de contact continu 102 présente une section transversale dont le contour externe s'inscrit dans une enveloppe 121 globalement circulaire ou ovoïde, représentée en pointillés. Le fil de contact 102 présente plus particulièrement une face extérieure de contact 115, de préférence, comme représenté, légèrement incurvée, et dont la largeur est inférieure à celle de l'organe de captation de courant du véhicule. Le fait que la face extérieure de contact 115 soit légèrement incurvée, avec un très grand rayon de courbure, permet d'augmenter la surface de contact et d'éviter la présence d'une ligne de points de contact, de sorte que l'on dispose d'un contact plus intime avec l'organe de captation qui glisse contre cette face de contact.

Le fil de contact continu 102 présente latéralement des facettes inclinées 116, 117 définissant deux rainures longitudinales en V 118 associées aux extrémités libres 106 des branches latérales 104 du profilé support 101, ces extrémités libres 106 présentant naturellement des facettes en biseau agencées avec la même inclinaison que les facettes 116 et 117 du fil de contact continu 102.

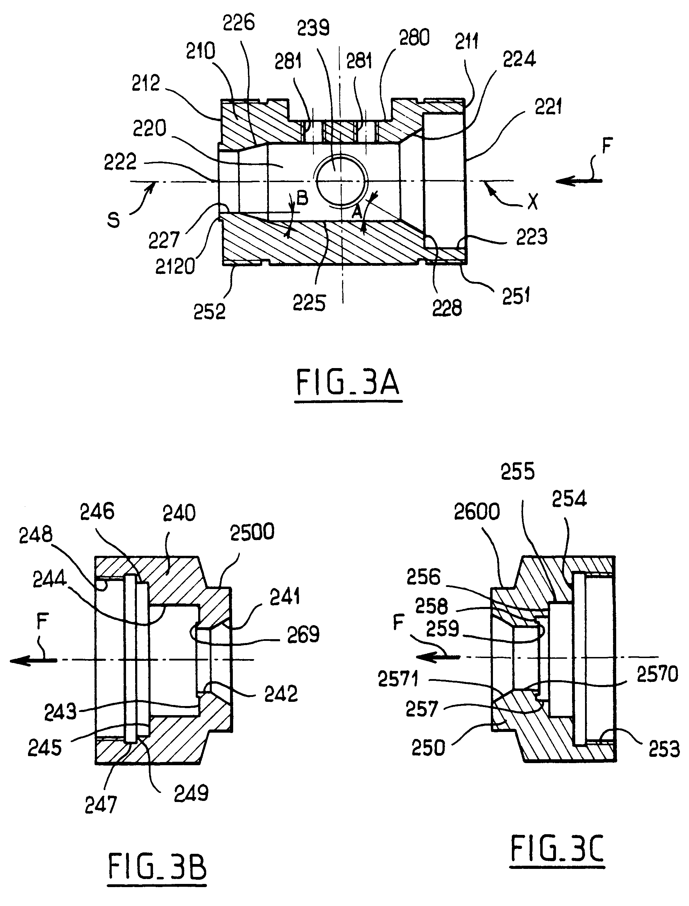

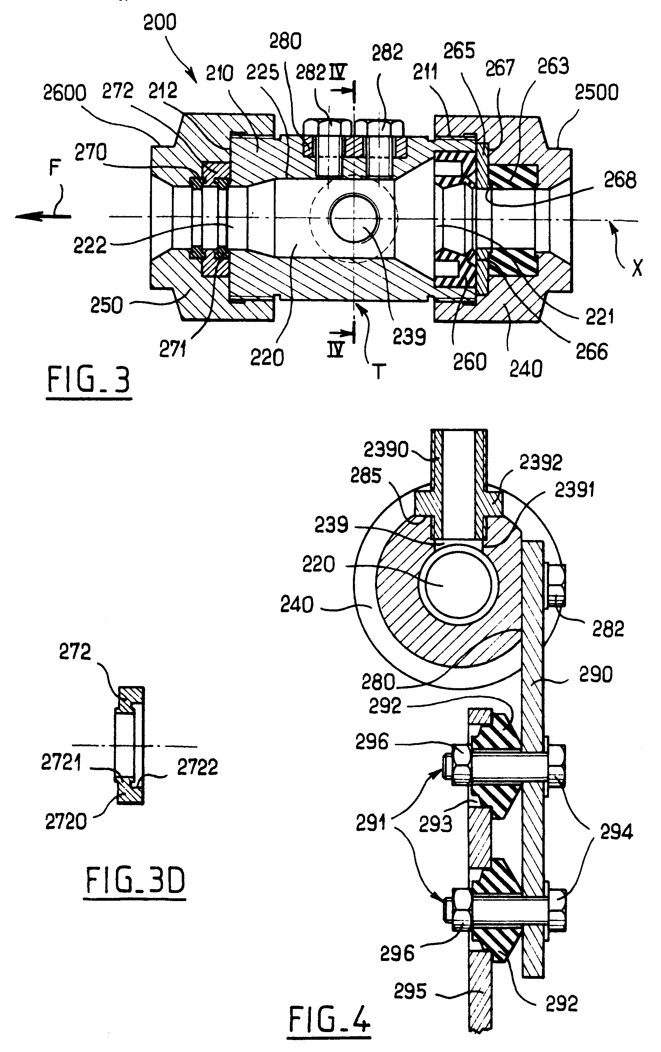

Le dépôt de graisse dans les rainures longitudinales 118 du fil de contact 102 s'effectue à l'aide d'un dispositif de graissage 200 conforme à l'invention, représenté en coupe axiale sur la figure 3.

Ce dispositif 200 comporte un corps de graisseur 210, allongé dans la direction d'un axe longitudinal X. Le corps de graisseur 210 est muni intérieurement d'une chambre de graissage 220, débouchant sur deux faces latérales opposées 211, 212 du corps de graisseur 210 pour former des ouvertures 221 et 222 entre lesquelles le fil de contact 102 est apte à défiler, dans le sens de la flèche F.

Dans la suite de la description, nous désignerons respectivement les ouvertures 221 et 222 par ouverture amont et ouverture aval, en référence au sens de défilement du fil de contact 102 dans la chambre de graissage 220.

Conformément à l'invention, la chambre de graissage 220 est adaptée à remplir de graisse les rainures longitudinales 118 du fil de contact 102, et il est prévu à cet effet une alimentation en graisse débouchant par un orifice 239 dans la chambre de graissage 220 ainsi qu'un système de joints d'étanchéité 260 et 270 s'appliquant sur l'enveloppe 121 de la section transversale du fil de contact 102 en amont et en aval de la chambre de graissage 220, propre à garantir une pression de graisse suffisante dans celle-ci et un bon essuyage du fil de contact 102.

La chambre de graissage 220 présente, de préférence, comme représenté plus particulièrement sur la figure 3A, une section interne symétrique de révolution autour de l'axe longitudinal X, et de diamètre globalement décroissant dans le sens de défilement du fil de contact 102, représenté par la flèche F.

Plus particulièrement, on remarque à l'examen de la figure 3A, que le corps de graisseur 210 présente, depuis l'ouverture amont 211 vers l'ouverture aval 222, successivement, un alésage d'entrée 223, de diamètre R₁, une première paroi conique 224 convergeante, un alésage central 225 de rayon R₂ inférieur à R₁, une deuxième paroi conique 226 convergeante et un alésage de sortie 227 de rayon R₃ inférieur à R₂.

Les angles A et B de convergence des parois coniques 224 et 226 sont de préférence, comme représenté, respectivement proches de 30° et 15°.

Un méplat 280 est formé sur la surface externe du corps de graisseur 210, dans une région médiane de celui-ci, pour accueillir une patte de fixation 290 liant le corps de graisseur 210 à une attache 295, comme montré sur la figure 4. La patte 290 est fixée sur le méplat 280 à la faveur de boulons 282 engagés dans des taraudages prévus dans le corps de graisseur 210.

De préférence, comme représenté, l'alésage central 225 s'étend à peu près sur la moitié de la longueur totale du corps de graisseur 210, de part et d'autre d'un plan médian transversal T pour le corps de graisseur 210.

L'alimentation en graisse se fait par l'orifice 239 disposé symétriquement par rapport au plan T et par rapport à un plan S contenant l'axe X et perpendiculaire au plan T.

Conformément à l'invention, un joint d'étanchéité amont 260 est prévu au niveau de l'ouverture amont 221 de la chambre de graissage 220 pour s'appliquer sur l'enveloppe 121 du fil de contact 102. De préférence, comme représenté, ce joint amont 260 est un joint à lèvre s'interposant entre le corps du graisseur 210 et le fil de contact 102. Le joint à lèvre 260 se loge dans l'alésage d'entrée 223 et vient en butée axialement contre un flanc transversal 228 d'un épaulement formé au niveau de la jonction de la paroi conique 224 avec l'alésage d'entrée 223.

Le joint à lèvre 260, de type connu en lui-même présente une forme annulaire de révolution, dont la section a globalement la forme d'un "U" couché, ouvert vers l'alésage central 225, et celui-ci est maintenu contre le flanc 228 par une bague d'entrée 240 qui se visse sur un filetage externe du corps de graisseur 210 s'étendant depuis la face d'entrée 211.

Si l'on se réfère plus particulièrement à la figure 3B, on voit que la bague d'entrée 240 est symétrique de révolution, et présente successivement, dans le sens de défilement du fil de contact 102, une fraisure 241, trois alésages successifs 242, 244, 246, de rayons respectifs R₄, R₅, R₆ croissants se raccordant de façon étagée pour former deux épaulements 243 et 245, puis une rainure annulaire 247 de rayon R₇ légèrement supérieur à R₆, et un quatrième alésage 248 de rayon R₈ compris entre R₆ et R₇. L'alésage 248 est taraudé et vient s'engager sur un filetage 251 prévu sur la surface externe du corps de graisseur 210, de sorte que la face 211 vient buter contre un flanc transversal 249 de la rainure 247, bordant l'alésage 246. L'alésage 246 est destiné à recevoir une rondelle 265 de maintien du joint amont 260, de sorte que ce dernier s'interpose axialement entre le flanc transversal 228 précité et une face 266 de la rondelle 265 précitée lorsque la bague d'entrée 240 est vissée sur le corps de graisseur 210.

On notera que le diamètre interne du perçage de la rondelle est de préférence, comme représenté, égal à R₄.

Conformément à une caractéristique avantageuse de l'invention, une bague de centrage 263 en élastomère, par exemple en néoprène, munie d'un passage interne de rayon égal à R₄, est logée dans le deuxième alésage 244, et s'interpose axialement entre la face 267 de la rondelle 265 opposée à la face 266 et l'épaulement 243.

De préférence, comme représenté, on prévoit sur la face 267 de la rondelle et l'épaulement 243 en contact avec la bague 263 des nervures circonférentielles se logeant dans des évidements annulaires de forme complémentaire situés sur les bords radialement internes de la bague pour participer au maintien de celle-ci. Plus précisément, la rondelle 265 est munie sur sa face 267 d'une nervure 268 bordant le perçage de la rondelle 265, une nervure similaire 269 étant également prévue sur le flanc transversal de l'épaulement 243 de la bague d'entrée 240.

Conformément à l'invention, il est prévu des moyens d'essuyage et d'étanchéité au niveau de l'ouverture aval 222 de la chambre de graissage 220, propres à s'appliquer sur l'enveloppe 121 du fil de contact 102 lorsque celui-ci quitte la chambre de graissage 220.

Ces moyens sont avantageusement constitués par deux joints toriques 270, 271 maintenus par une bague de sortie 250 vissée sur un filetage externe 252 du corps de graisseur 210, au niveau de la face de sortie 212.

La bague de sortie 250 est de préférence, comme représenté sur la figure 3C, symétrique de révolution. Cette bague 250 comporte, successivement, dans le sens de défilement du fil de contact 102, un premier alésage taraudé 253 de rayon R₉ destiné à s'engager par vissage sur un filetage externe 252 prévu sur le corps de graisseur 210, s'étendant depuis sa face de sortie 212, un premier épaulement 254, un deuxième alésage 255 de rayon R₁₀ inférieur à R₉, un deuxième épaulement 256, un troisième alésage 257 de rayon R₁₁ inférieur à R₁₀, un troisième épaulement 258 muni à sa périphérie radialement interne d'une nervure circonférentielle 259, un quatrième alésage 2570 de rayon R₁₂ inférieur à R₁₁ et une fraisure de sortie 2571, divergeant dans le sens de la flèche F.

Une bague porte-joint 272 est logée dans le deuxième alésage 255 de rayon R₁₀ et immobilisée axialement dans celui-ci par butée contre le flanc transversal de l'épaulement 256 et la face de sortie 212 lorsque la bague 250 est vissée sur le corps de graisseur 250.

On se reportera plus particulièrement à la figure 3D où l'on voit que la bague 272 a une forme annulaire dont la section comporte une partie 2720 de forme rectangulaire allongée selon l'axe de symétrie de la bague prolongée radialement vers l'intérieur, sur un secteur axial du côté 2722 de sa périphérie tourné vers l'intérieur par une partie 2721 en forme de T.

On notera que la partie rectangulaire 2720 a une épaisseur correspondant à R₁₁ - R₁₀ de sorte que lors du montage de la bague porte-joint 272 dans l'alésage 255 dans la bague de sortie 250, le côté 2722 se situe dans le prolongement de l'alésage 257.

De préférence, comme représenté sur la figure 3, le montage de la bague porte-joint 272 interposée entre la bague de sortie 250 et le corps de graisseur 210 fait apparaître deux logements propres à retenir des conformations de profil complémentaire de joints toriques 270 et 271.

On notera qu'à cet effet il est prévu sur la face de sortie 212 du corps de graisseur 210 une nervure circonférentielle 2120 bordant l'ouverture aval 222.

Si l'on se reporte maintenant à la figure 4, qui est une vue en coupe dans le plan médian transversal T précité, on remarque que l'alimentation en graisse se fait par l'intermédiaire d'un embout de connexion 2390 qui vient se visser dans un taraudage 2391 débouchant sur l'orifice 239, jusqu'à s'appliquer par une collerette 2392 contre un méplat 285 prévu sur la surface externe du corps de graisseur 210, l'embout de connexion 2390 étant susceptible d'être relié, par une canalisation non représentée, à une pompe propre à délivrer la graisse avec une pression de l'ordre de quelques bars, typiquement entre 3 et 5 bars.

De préférence, comme représenté, ce méplat 285 est orienté à angle droit du méplat 280.

La patte de fixation 290 est destinée à servir au montage du corps de graisseur 210 sur une attache 295 par l'intermédiaire de deux dispositifs amortisseurs de vibrations 291 propres à autoriser un débattement élastique de la patte de fixation 290 par rapport à la barre d'attache 295 dans les trois directions, mais de façon privilégiée dans une direction perpendiculaire à l'orientation du méplat 280. Ces dispositifs amortisseurs 291 comportent de préférence, comme représenté, chacun un coussinet 292 en matière élastomère engagé par une extrémité dans un perçage 293 prévu sur l'attache 295.

Chaque coussinet 292 est avantageusement fixé sur l'attache 295 à la faveur de boulons retenus dans des alésages répartis autour des perçages 293. Chaque coussinet 292 est en outre traversé par un perçage central dans lequel vient s'engager un boulon 294 dont la tête s'appuie sur la patte de fixation 290 tandis qu'un ou plusieurs écrous de retenue 296 s'appliquent sur l'extrémité du coussinet 292 engagée dans les perçages 293.

On notera que le dispositif de graissage présente, grâce aux bagues d'entrée 240 et de sortie 250 rapportées sur le corps de graisseur 210 une conception modulaire, qui permet d'adapter facilement, en changeant simplement les bagues d'entrée 240 et de sortie 250 et les diverses pièces logées à l'intérieur de celles-ci, le dispositif de graissage 210 à des fils de contact de différents diamètres.

A cet effet, les bagues 240 et 250 présentent une surface externe prismatique, destinée à faciliter la prise d'une clé de serrage utilisée pour leur montage ou leur changement.

On a représenté sur la figure 5 un schéma d'ensemble montrant l'utilisation du dispositif de graissage qui vient d'être décrit lors de la pose d'un fil de contact 102 dans les profilés support 101.

Le fil de contact 102 est enroulé sur un touret de câble non représenté, monté sur un véhicule se déplaçant le long de la voie, dans le sens de la flèche D.

Le fil de contact 102 est mis en place dans les profilés 101 à l'aide d'un chariot 300 qui sera décrit plus en détail dans la suite, ce chariot 300 étant entraîné le long des profilés 101 à l'aide d'un câble de traction 400 attaché au véhicule précité.

Le dispositif de graissage 200 est enfilé sur la portion de fil de contact 102 s'étendant entre le touret de câble et le chariot 300, et est maintenu à une distance constante du chariot 300 par un câble 402, attaché par une extrémité 401 au câble 400 précité, et à l'autre extrémité à l'attache 295.

On a référencé par 420 une réserve de graisse, montée sur ledit véhicule, mise sous pression à l'aide d'une pompe 425, au travers de connexions hydrauliques 430.

La graisse est envoyée sous pression, depuis la réserve 420 dans la chambre de graissage du dispositif de graissage 200 au travers d'un flexible d'alimentation 410 muni d'une vanne 415.

On remarquera sur la figure 5 que le dispositif de graissage 200 est muni, conformément à une caractéristique avantageuse de l'invention, d'une raclette 440, entraînée en aval du dispositif 200 par une chaîne 450 accrochée sur l'attache 295. La raclette 440 a la forme générale d'une coupelle, percée d'un orifice pour le passage du fil de contact 102, cet orifice s'appliquant par son bord sur l'enveloppe 121 du fil de contact 102.

La concavité de la coupelle est orientée vers la chambre de graissage et vers le bas, de sorte que la graisse récupérée par la raclette 440 lors de l'essuyage du fil de contact 102 quitte celle-ci par gravité.

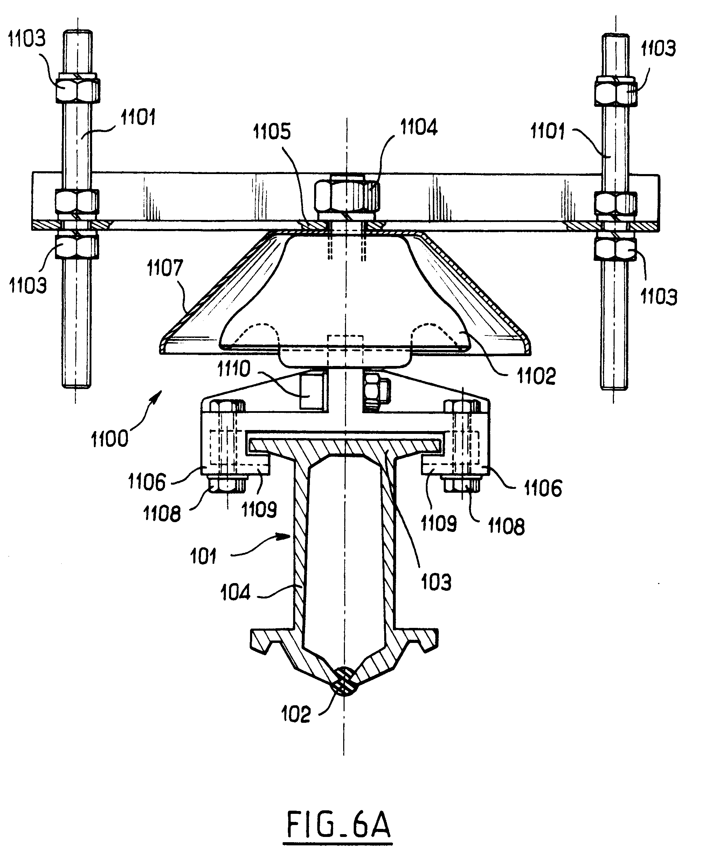

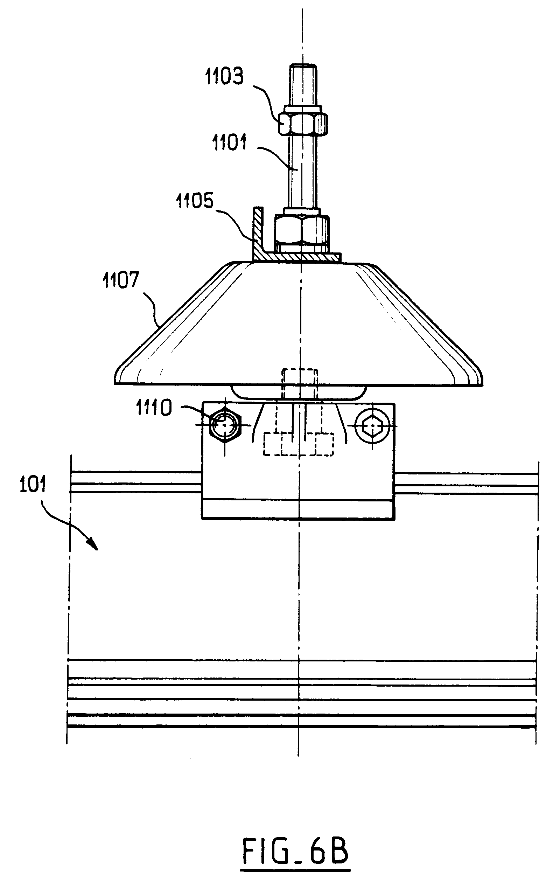

On a représenté sur les figures 6A et 6B une ligne d'alimentation électrique du type permettant la captation par pantographe, utilisée par exemple pour prolonger un caténaire classique lors du franchissement de tunnels par la voie ferrée.

Le profilé 101 est monté sous la voûte d'un tunnel, par exemple au moyen d'un support isolant 1100 comprenant un corps d'isolateur 1102. Le corps d'isolateur 1102 est boulonné, à sa partie supérieure sur une semelle 1105 ayant en section la forme d'un L, elle-même fixés sous la voûte, avec possibilité de réglage vertical, au moyen de tiges filetées 1101 et d'écrous 1103.

Le corps d'isolateur 1102 et le profilé 101 sont abrités vis-à-vis d'éventuels ruissellements provenant de la voûte par un chapeau 1107.

Le corps d'isolateur 1102 soutient à sa partie inférieure une mâchoire constituée de deux éléments profilés 1106 réunis par des boulons et écrous 1110.

Deux ergots de retenue 1109 sont fixés par des boulons et écrous 1108 sous chacun des éléments profilés 1106 pour former avec ceux-ci deux gorges ayant en section la forme d'un "U" couché, ouvertes l'une vers l'autre, et dans lesquelles se logent les extrémités latérales de l'embase 103.

On a représenté sur la figure 7 une variante de réalisation de ligne d'alimentation, du type troisième rail.

On distingue sur cette figure un support isolant 1200, comportant un corps principal 1202, qui est fixé par des boulons 1201 sur le sol S, avec possibilité de réglage vertical, ce corps principal présentant une mâchoire amovible 1203 qui est fixée par des boulons 1204. Le support isolant présente avec sa mâchoire deux ergots 1205 et 1206 permettant de confiner un espace destiné à recevoir l'embase 103 du profilé support 101 associé. On utilise de préférence, comme représenté, une suspension souple, avec des bourrelets élastiques 1207, afin de permettre une certaine souplesse, dans toutes les directions, de la ligne d'alimentation électrique 100. Le profilé 101 est avantageusement équipé d'une gaine isolante 1208, qui protège les parties conductrices de la ligne d'alimentation électrique 100.

Les figures 6A, 6B et 7 illustrent un mode de captation du courant verticale, par en dessous, mais il est entendu qu'il ne s'agit là que d'un exemple illustratif.

On a représenté en traits mixtes, sur la figure 7, le chariot 300 précité servant à la pose ou au remplacement du fil de contact 102. Ce chariot 300 comporte un châssis 301, sur lequel sont montés des galets de roulement 302 capables de se déplacer sur les facettes supérieures 110 des profilés support 101. L'avancement du chariot 300 est assuré par le câble 400 précité et non représenté sur cette figure. Le châssis 301 du chariot 300 présente en outre deux roues 304, dont la périphérie pénètre dans les rainures longitudinales 109 des profilés support 101, l'écartement entre les roues 304 étant réglé de telle façon qu'au passage du chariot 300, les branches latérales 104 du profilé support concerné s'écartent suffisamment pour laisser passer la nervure centrale longitudinale 120 du fil de contact continu 102. Le positionnement vertical précis du fil de contact continu est assuré par un galet d'appui (non représenté) dont on distingue ici la tige de réglage en hauteur 305. Le chariot 300 est avantageusement entraîné à une vitesse de 2 km/h : on comprend ainsi que le dépôt de graisse dans les rainures du fil de contact lors de la pose de celui-ci est effectué aisément, avec une grande rapidité, et permet de proposer de réaliser des lignes d'alimentation électrique à plusieurs fils de contact sans les inconvénients liés à la durée des temps de main d'oeuvre nécessaires à la pose ou au remplacement des fils de contact, en disposant simplement côte-à-côte plusieurs dispositifs de graissage conformes à celui qui vient d'être décrit.

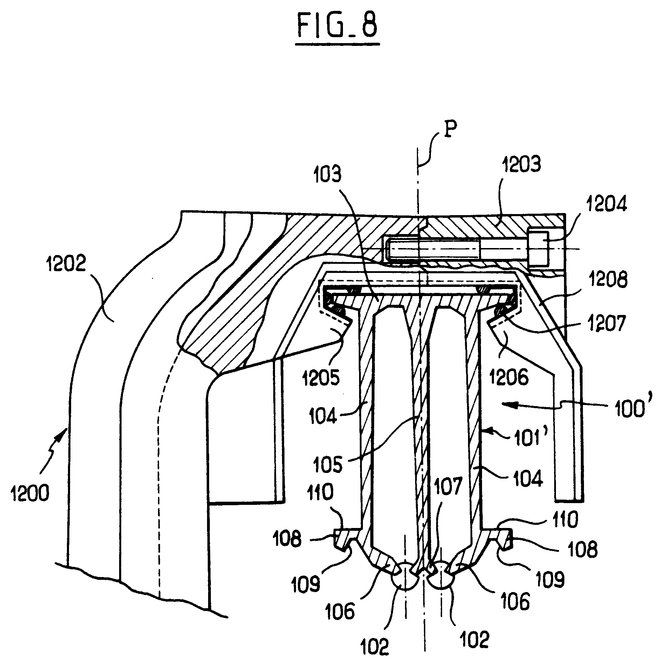

De ce fait, l'invention a également pour objet une ligne d'alimentation électrique 100' améliorée, représentée sur la figure 8, dont le profilé support 101' assure le maintien de deux fils de contact parallèles 102, juxtaposés, maintenus adjacents l'un à l'autre pour être simultanément contactés par l'organe de captation de courant du véhicule. Une telle disposition est intéressante lorsque l'on souhaite disposer d'une surface de contact importante malgré la faible section des fils de contact continus. Le profilé support 101' présente, en plus de ses deux branches latérales 104, une branche centrale 105 dont l'extrémité libre 107, en forme de fourche, forme une pince élastique avec l'extrémité libre 106 de chacune des branches latérales 104 dudit profilé. Il est aisé de comprendre que le dépôt de graisse lors de la pose ou la dépose des fils de contact continus 102 pourra s'effectuer à l'aide d'un chariot 300 similaire à celui précédemment décrit, étant entendu que les branches latérales 104 se déforment seules au passage dudit chariot, la branche centrale 105 restant quant à elle dans le plan médian P du profilé support 101'.

Finalement, un dispositif pour revêtir de graisse un fil de contact conforme à l'invention se révèle particulièrement robuste et efficace tout en permettant de réduire significativement le coût résultant de la pose ou du remplacement du fil de contact des lignes d'alimentation électrique.

De ce fait, on peut proposer de réaliser des lignes d'alimentation électrique à plusieurs fils de contact.

## Revendications

**1/** Dispositif pour revêtir de graisse les rainures d'un fil de contact de ligne d'alimentation électrique présentant au moins deux rainures longitudinales servant au montage du fil dans des profilés support, caractérisé en ce qu'il comprend :
. une chambre de graissage (220) adaptée à remplir de graisse lesdites rainures longitudinales (118), ouverte à deux extrémités (221, 222) opposées dont une ouverture amont (221) et une ouverture aval (222), entre lesquelles le fil de contact (102) est apte à défiler, et
. une alimentation en graisse (239) débouchant à l'intérieur de ladite chambre.

**2/** Dispositif selon la revendication 1, caractérisé en ce qu'il comprend de plus des moyens d'essuyage (270, 271) du fil de contact quittant la chambre de graissage, propres à essuyer la graisse déposée en excès sur le fil de contact (102) et s'étendant hors des rainures longitudinales.

**3/** Dispositif selon la revendication 2, caractérisé en ce que lesdits moyens d'essuyage comprennent un système de joints d'étanchéité (270, 271) placés au niveau de l'ouverture aval (222) et s'appliquant sur l'enveloppe (121) de la section transversale du fil de contact.

**4/** Dispositif selon la revendication 3, caractérisé en ce que les moyens d'essuyage comprennent de plus une raclette (440) ayant la forme générale d'une coupelle, percée d'un orifice pour le passage du fil de contact, placée en aval de la chambre de graissage (220), la concavité de la coupelle étant orientée vers la chambre de graissage et le bord dudit orifice s'appliquant sur l'enveloppe (121) de la section transversale dudit fil de contact (102).

**5/** Dispositif selon l'une des revendications 1 à 4, caractérisé en ce que la chambre de graissage (220) présente une section interne globalement décroissante dans le sens de défilement du fil de contact (102).

**6/** Dispositif selon l'une des revendications 1 à 5, caractérisé en ce qu'il comprend en outre des moyens d'étanchéité (260) placés au niveau de l'ouverture amont (221) de la chambre de graissage (220).

**7/** Dispositif selon la revendication 6, caractérisé en ce que ces moyens d'étanchéité comprennent un joint d'étanchéité (260) amont.

**8/** Dispositif selon la revendication 7, caractérisé en ce que la chambre de graissage (220) est ménagée dans un corps de graisseur (210) présentant depuis l'ouverture amont (221) par laquelle le fil de contact (102) est introduit jusqu'à l'ouverture aval (222) par laquelle le fil de contact quitte la chambre de graissage (220), successivement :
. un alésage d'entrée (223) de plus grand diamètre interne,
. une première paroi conique convergeante (224),
. un alésage central (225), de diamètre interne intermédiaire,
. une deuxième paroi conique convergeante (226),
. un alésage de sortie (227) de plus petit diamètre interne.

**9/** Dispositif selon la revendication 8, caractérisé en ce que ledit joint d'étanchéité amont (260) est un joint à lèvre logé dans l'alésage d'entrée (223).

**10/** Dispositif selon l'une des revendications 5 à 9, caractérisé en ce que les moyens d'essuyage et d'étanchéité (260, 270, 271) sont maintenus en place par l'intermédiaire de bagues d'entrée et de sortie (240, 250), vissées à des extrémités opposées sur la surface externe du corps de graisseur (210), l'adaptation du dispositif à des tailles de fil de contact différentes se faisant en outre par simple changement des bagues et des moyens d'étanchéité et d'essuyage qu'elles maintiennent en place.

**11/** Dispositif selon la revendication 10, caractérisé en ce qu'une bague de centrage (263) en élastomère est logée à l'intérieur de la bague d'entrée (240).

**12/** Dispositif selon l'une des revendications 1 à 11, caractérisé en ce que la pression de graisse à l'intérieur de la chambre de graissage (220) est comprise entre 2 et 6 bars.

**13/** Dispositif selon l'une des revendications 1 à 12, caractérisé en ce que la vitesse de défilement du fil de contact (102) dans la chambre de graissage (220) est d'environ 2 km/h.

**14/** Dispositif selon l'une des revendications 1 à 13, caractérisé en ce que l'ensemble du dispositif comprend un chariot (300) pouvant se déplacer sur ladite ligne d'alimentation électrique (100), pour poser le fil de contact (102) de façon continue.
